# EUROPEAN PATENT APPLICATION

(11) **EP 4 321 974 A1**
(43) Date of publication of application: **14.02.2024**
(21) Application number: 23188926.2
(22) Date of filing: 01.08.2023
(51) Int. Cl.: G06F 3/01, G06F 3/03, G06F 3/04815

(54) **GESTURE LOCOMOTION IN AN ARTIFICAL REALITY ENVIRONMENT**

(30) Priority: 11.08.2022 US 202217819073
(71) Applicant: Meta Platforms Technologies, LLC, Menlo Park, CA 94025 (US)
(72) Inventor: LIAO, Mark Yu-Der, Menlo Park, 94025 (US); FURTWANGLER, Brandon, Menlo Park, 94025 (US); BEEVE-MORRIS, Cassidy Jake, Menlo Park, 94025 (US); YAN, Hua, Menlo Park, 94025 (US); SCHUBERT, Martin, Menlo Park, 94025 (US)
(74) Representative: Murgitroyd & Company

(57) **Abstract**

Aspects of the present disclosure are directed to hand gesture-based locomotion systems for controlling a character's position and orientation in an artificial reality environment. A virtual locomotion system can recognize a gating gesture and responsively cause the system to enter a locomotion mode. While in the locomotion mode, the virtual locomotion system can render a virtual controller user interface with multiple elements that each correspond to a respective locomotive action. Through hand movements and gestures, a user can navigate through the virtual controller, trigger particular locomotive action(s), effect smooth movement and turning of the character, and effect "snap" movement and turning of the character. Beneficially, the gesture-based locomotion system can replace physical controllers and enable users to navigate through 3D virtual environments.

## Description

### TECHNICAL FIELD

The present disclosure is directed to controller-independent, gesture-based locomotion systems for controlling a character's position and orientation in an artificial reality environment.

### BACKGROUND

Artificial reality (XR) environments can be provided by a variety of systems, such as projectors, head mounted displays, "cave" systems, etc. Users can interact with an artificial reality environment such as by selecting objects, moving, rotating, resizing, actuating controls, changing colors or skins, defining interactions between virtual objects, setting virtual forces to act on virtual objects, or practically any other imaginable action.

Moving and reorienting a character in an XR environment is typically achieved by tracking the user's physical movement through a real-world space or using physical input devices like handheld controllers with joysticks. However, these methods of character locomotion can be infeasible and impractical. For example, a user may not be able to freely move about a real-world space (e.g., due to a lack of sufficient space, due to an injury or disability, etc.). In addition, some XR systems, such as VR headsets, may be operable without external controllers, such that some users may not possess controllers to enable in-place locomotion in an XR environment. Furthermore, some games or applications might be designed to receive user input via hand gestures which are difficult to perform when holding onto controllers.

### SUMMARY

According to a first aspect, there is provided a method for controlling a character within a virtual reality environment, the method comprising: monitoring a user's hand for a first motion; identifying a gating gesture from the first motion, wherein the gating gesture occurs at a first location in the virtual reality environment; based on the identification of the gating gesture, entering a locomotion mode; and while in the locomotion mode: rendering a user interface comprising two or more spatially-separated regions, wherein each of the two or more spatially-separated regions is associated with a respective locomotive action that controls at least one of a position and an orientation of the character; monitoring the user's hand for a second motion, wherein the second motion includes a movement of the user's hand from the first location to a second location in the virtual reality environment, wherein the second location is within one of the two or more spatially-separated regions; identifying a release gesture from the second motion, wherein the second motion occurs at the second location; and upon identifying the release gesture, causing the character to perform the respective locomotive action associated with the one of the two or more spatially-separated regions.

The one of the two or more spatially-separated regions may be associated with a locomotive action that updates the orientation of the character by a predetermined interval. Causing the character to perform the respective locomotive action may comprise updating the orientation of the character by the predetermined interval.

The one of the two or more spatially-separated regions may be associated with a locomotive action that moves the character by a predetermined interval. Causing the character to perform the respective locomotive action may comprise updating the position of the character by the predetermined interval.

The user interface may be a first user interface. The locomotion mode may comprise a selection mode and a teleport mode. Entering the locomotion mode may comprise entering the selection mode. The method may further comprise: upon identifying the release gesture, exiting the selection mode and entering the teleport mode; and while in the teleport mode: rendering a second user interface comprising an arc extending between the character and a teleport location in the virtual environment; monitoring the user's hand for a third motion; identifying a triggering gesture from the third motion; and upon identifying the triggering gesture, moving the character to the teleport location.

The third motion may include a movement of the user's hand from the second location to a third location in the virtual reality environment. The teleport location may be a first teleport location. The method may further comprise: based on the movement of the user's hand to the third location, updating the arc to extent between the character and a second teleport location in the virtual environment. Moving the character to the teleport location may comprise moving the character to the second teleport location.

The character may be positioned on a first surface in the virtual environment. The second teleport location may be on a second surface in the virtual environment. The second surface may be at a higher elevation than the first surface in the virtual environment.

The arc may enter a first region in which the character is not permitted to be positioned at a collision point. The method may further comprise: determining the teleport location in the virtual environment as a location that is proximate to the collision point in a second region in which the character is permitted to be positioned.

The character may not be permitted to be positioned in the first region because the first region is blocked by a wall. Teleport location may be a location below the collision point and adjacent to the wall.

The character may not be permitted to be positioned in the first region because the first region is blocked by a ceiling. Teleport location may be a location below the collision point and beneath the ceiling.

The method may further comprise: while in the teleport mode: monitoring the user's hand for a fourth motion; identifying an exit gesture from the third motion; and upon identifying the exit gesture, exiting the teleport mode.

The user interface may be a first user interface. The two or more spatially-separated regions may be two or more first spatially-separated regions. The method may further comprise: while in the locomotion mode: monitoring the user's hand for a third motion, wherein the third motion includes a movement of the user's hand from the first orientation to a second orientation; identifying a layer change gesture from the third motion; and upon identifying the layer change gesture, rendering a second user interface comprising two or more second spatially-separated regions, wherein each of the two or more second spatially-separated region is associated with a respective locomotive action that controls at least one of a position and an orientation of the character, and wherein the two or more second spatially-separated regions are associated with different locomotive actions than that of the two or more first spatially-separated regions.

The method may further comprise: upon identifying the release gesture, exiting the locomotion mode.

The method may further comprise: detecting, from the first motion, an index finger and a thumb of the user's hand touching to form a pinching gesture. The identification of the gating gesture may be based on the detection of the pinching gesture.

The method may further comprise: detecting, from the second motion, the index finger and the thumb of the user's hand separating from the pinching gesture. The identification of the release gesture may be based on the detection of the index finger and the thumb of the user's hand separating from the pinching gesture.

According to a second aspect, there is provided a computer-readable storage medium storing instructions that, when executed by a computing system, cause the computing system to carry out the method of the first aspect.

According to a third aspect, there is provided a computing system for controlling a character within a virtual reality environment, the computing system comprising: one or more processors; and one or more memories storing instructions that, when executed by the one or more processors, cause the computing system to carry out the method of the first aspect.

According to a fourth aspect, there is provided a computer program product comprising instructions which, when executed by a computing system, cause the computing system to carry out the method of the first aspect.

Also described is a further method for controlling a character within a virtual reality environment, the method comprising: monitoring a user's hand for a first motion; identifying a gating gesture from the first motion, wherein the gating gesture occurs at a first location in the virtual reality environment; based on the identification of the gating gesture, entering a locomotion mode; and while in the locomotion mode: rendering a user interface defining a precise region, wherein the precise region is associated with fine locomotive action that smoothly controls at least one of a position and an orientation of the character, and wherein a region outside of the precise region is associated with discrete locomotive control that rapidly changes at least one of the position and the orientation of the character; monitoring the user's hand for a second motion, wherein the second motion includes a movement of the user's hand from the first location to a second location in the virtual reality environment, wherein the second location is within precise region; and while the user's hand is in the second location, incrementally updating at least one of the character's position and orientation.

The operations may further comprise: monitoring the user's hand for a third motion; identifying a release gesture from the third motion that includes a movement of the user's hand from the first location to a third location in the virtual reality environment, wherein the third location is located in the region outside of the precise region; based on the identification of the release gesture, exiting the locomotion mode; and based on the identification of the release gesture, rapidly changing at least one of the position and the orientation of the character by a greater amount than the incremental update while the user's hand is in the second location.

Rapidly changing at least one of the position and the orientation of the character may comprise updating the character's orientation along at least one axis by at least ten degrees.

Rapidly changing at least one of the position and the orientation of the character may comprise updating the character's orientation along at least one axis by at least one meter.

A further system, computer-readable medium and computer program product configured to carry out the further method may also be provided.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5A is a flow diagram illustrating a process used in some implementations of the present technology for performing gesture-based locomotion in an XR environment.
Figure 5B is a flow diagram illustrating a process used in some implementations of the present technology for performing gesture-based teleportation in an XR environment.
Figure 5C is a flow diagram illustrating a process used in some implementations of the present technology for performing gesture-based fine locomotive control and snap locomotive control in an XR environment.
Figure 5D is a flow diagram illustrating a process used in some implementations of the present technology for gesture-based navigation of a multi-layer virtual controller in an XR environment.
Figure 6A is a conceptual diagram illustrating an example of a gesture-based virtual controller for controlling a character in an XR environment.
Figure 6B is a conceptual diagram illustrating an example of a teleportation system for moving a character in an XR environment.
Figure 6C is a conceptual diagram illustrating an example of a teleportation system encountering environmental limits when moving a character in an XR environment.
Figure 7 is a conceptual diagram illustrating an example of a precise system for providing both fine locomotive control and snap locomotive control of a character in XR environment.
Figure 8 is a conceptual diagram illustrating an example navigation through a multi-layer virtual controller using a layer change gesture.
Figure 9A is a conceptual diagram illustrating an example scenario in which gesture-based teleportation moves a character between two locations on the same surface.
Figure 9B is a conceptual diagram illustrating an example scenario in which gesture-based teleportation moves a character between locations on different surfaces at different elevations.
Figure 9C is a conceptual diagram illustrating an example scenario in which gesture-based teleportation collides with a wall and resolves to move the character to a nearby location.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to gesture-based locomotion systems for controlling a character's position and orientation in an XR environment. A virtual locomotion system of an XR system can monitor a user's hand or hands using computer vision, inertial measurement unit (IMU) data, and/or other suitable means for a gating gesture (e.g., an index pinch gesture). In response to recognizing the gating gesture, the virtual locomotion system can switch an input context from a general input mode to a locomotion mode, during which subsequent gestures are interpreted by the XR system as being related to locomotion (i.e., not for interacting with other menus, objects in the XR environment, etc.). The virtual locomotion system then tracks the movement of the user's hand relative to the starting location at which the gating gesture was performed to determine which locomotive action, if any, to perform. In some embodiments, the virtual locomotion system can render a user interface with spatially-separated regions that each represent a particular locomotive action, such as moving in a particular direction, turning, crouching, jumping, or activating a teleportation mode. For example, if the user's hand performs a release gesture (e.g., releasing the index pinch) over a region for turning the character to left by 90 degrees, the virtual locomotion system accordingly reorients the character in the XR environment.

In some embodiments, the virtual locomotion system can implement a multi-layer virtual controller, with each layer including a different combination of locomotive actions. For instance, one layer of the virtual controller might include regions for turning the character to the left or right without changing the character's position, while another layer includes regions for moving a character to the left or right (i.e., strafing) without changing the character's orientation. The user may perform a layer change gesture (e.g., reorienting their index-pinched hand from a palm-down orientation to a palm-up orientation) which changes which layer is the active layer. In this manner, a user can select a desired or appropriate set of locomotive controls that suits a particular activity in the XR environment, e.g., with gestures from a single hand.

In some cases, a user may wish to only move without turning, simultaneously move and turn, and turn without moving without having to switch the active layer in the virtual controller. In some embodiments, the virtual locomotion system can implement a precise system, which intuitively combines fine locomotive control (e.g., smoothly moving and turning simultaneously) with snap locomotive control (e.g., instantly or rapidly moving or turning). Consider an example where a user performs the gating gesture and subsequently moves their hand to the left or right by some amount. As the user moves their hand to the left, the character incrementally or slowly turns to the left. The rate at which the character turns may depend on the distance that the user's hand moved to the left relative to the gating gesture location. The virtual locomotion system may perform fine locomotive control in this manner, so long as the user's hand remains within a defined precise region. However, if the user's hand continues extending to the left such that their hand moves outside of the precise region, the virtual locomotion system can interpret a release gesture in this outer region as an input to perform "snap" or discrete locomotive control, such as rapidly turning the character by a substantial step (e.g., by a predetermined amount or interval, such as 10 degrees, 20 degrees, 45 degrees, etc.). In this manner, the virtual locomotion system can enable the user to both finely and quickly adjust the character's position and/or orientation, without having to navigate between different layers of a virtual controller.

Some users may also wish to have a method for snap or discrete locomotive movement, so that they can move their character about within an XR environment quickly and efficiently. In some embodiments, the virtual locomotion system can implement a teleportation system, in which a user's character can be rapidly or instantly moved from its current position to a different position in the XR environment. For instance, the virtual locomotion system can provide a region of a virtual controller that, when activated (e.g., when a release gesture is performed within that region), activates a teleportation mode. While in the teleportation mode, the virtual locomotion system can render a user interface indicating where the character will teleport to in the XR environment if the user performs a triggering gesture. The user can move their hand to adjust the teleport location prior to activating the teleport action. In addition, the system may permit the user to perform multiple triggering gestures in succession to allow the character to "jump" through the XR environment quickly. The virtual locomotion system can monitor the user's hand for an exit gesture (e.g., a twisting or reorientation of the user's hand) to deactivate teleportation mode and return to the general input context.

In some embodiments, the virtual locomotion system can limit the teleportation mode so as not to violate certain environmental constraints. For example, if the user aims to teleport to a vertical wall or ceiling, the virtual locomotion system can determine that the targeted teleport location is not permitted (e.g., because the XR environment has gravity and does not permit the character to cling to walls). If the user attempts to teleport to an unpermitted location, the virtual locomotion system can determine a nearby location on a surface that the character is permitted to teleport to (e.g., a location on the ground underneath or near the targeted teleport location). This process of handling environmental collisions and determining an appropriate teleport location may be visually rendered in the XR environment, such that the user is aware of the collision and is informed of the actual teleport location prior to activating the teleport. In this manner, the teleportation mode of the virtual locomotion system can allow the character to move at discrete intervals without the character exceeding the boundaries of the XR environment or otherwise violating the rules of the XR application.

Furthermore, the teleportation mode may permit the character to not only move between positions on the same surface, but also can permit the character the move between two surfaces at different elevations. For example, the teleportation "trajectory" can be visually represented as an arc, which allows the character to teleport onto a surface at a higher or lower elevation. In this manner, the user can perform teleport-based navigation across virtual terrain other than a flat, equal-elevation ground surface, without having to specifically perform a jump-and-forward-movement locomotive action (which may be difficult to perform without providing two or more inputs simultaneously, as is typical with physical controllers).

The virtual locomotion system can implement some combination of precise systems, teleportation systems, and multi-layered menus to provide intuitive, effective, and equitable locomotion controls-all without a physical controller. Whereas traditional physical controllers enable users to perform two or more inputs simultaneously (e.g., a pressing multiple buttons with different fingers, controlling multiple joysticks with two hands, etc.), it is difficult to detect multiple simultaneous inputs with virtual controls, and even more so with respect to gesture-based XR systems. However, virtual controls offer significant freedom and flexibility over their physical counterparts. At one point, physical keyboards were considered the most productive input device for mobile phones; however, physical keyboards have all but been replaced by touchscreen-based keyboards, which can be dynamically changed to suit the needs of a particular input context (e.g., a standard keyboard, an emoji keyboard, a number pad without alphabetic characters for numeric inputs, freeform input for handwriting, etc.). While physical keyboards are still commonly found today, touchscreen keyboards have distinct advantages in some scenarios.

The present application contemplates techniques for providing controllerless methods of locomotive input that serve as an alternative to physical controllers. Much like touchscreen keyboards, gesture-based locomotive input can provide more flexibility than its physical counterpart, and can be intuitively designed and implemented to enable users to navigate within an XR environment with relative ease and simplicity. Importantly, the virtual locomotion systems of the present disclosure can be used to inclusively provide users who are unable to afford physical controllers, whose context makes controllers unfeasible, or who are disabled and cannot use a physical controller to use various XR applications. Virtual locomotion systems of the present disclosure improve the functioning of XR computing systems by providing technological improvements over controller-based XR peripherals-including gesture-based locomotion systems for controlling a character's position and orientation in an artificial reality environment.

Significantly, the majority of controllers for navigating a character in a three dimensional (3D) virtual environment involves the use of two joysticks-one for movement or translation, and the other for reorientation-and therefore require two hands to operate them. The virtual locomotion systems disclosed herein can be operated with (i.e., can control a character's position and orientation using) a single hand. Thus, virtual locomotion systems can be used to implement more equitable means of locomotive control.

Moreover, a key benefit of virtual and artificial reality systems over conventional digital systems is that VR and XR systems provide more intuitive experiences that simulates a user's physical presence in a virtual environment. Headsets and 3D sound systems enable users to be fully immersed in a virtual environment. However, handheld controllers can detract from this immersive experience-in part because people do not carry around controllers to interact with the real world-thereby reducing the intuitiveness and immersion of the XR experience. Thus, providing effective controllerless XR input systems is a problem that is necessarily rooted in computer technology (particularly, VR and XR computing systems).

As described herein, the term "locomotive action" generally refers an instruction, action, or input to modify a character's position and/or orientation within an XR environment. In some cases, the character may be a virtual camera in the virtual environment, such that adjusting its orientation involves changing the field-of-view (FOV) of that virtual camera. The locomotive action may involve transmitting input control(s) to a separate application, making function calls to a game engine's software development kit (SDK) for controlling a virtual player character, or the like.

In some cases, a locomotive action may involve changing a character's position and/or orientation by a predefined or predetermined interval. For instance, a locomotive action may involve turning a character to the left or right by a predetermined number of degrees, or might involve moving the character to a different location in the XR environment by a predetermined or specified distance or interval. As described herein, a "predetermined interval" may refer to both an amount (e.g., distance, degrees, etc.) and a direction (e.g., left, right, forward, back, or some combination thereof; clockwise or counterclockwise along an axis, etc.). Put differently, a predetermined interval may specify a translation vector or a spin vector. In some cases, the amount and direction of a predetermined interval may correspond to the extent of a user's hand movement (e.g., the position of a teleport location, or turning to the left or right by a discrete interval that relates to how far the user moved their hand to the left or right before performing a release gesture, etc.).

As described herein, the term "gesture" generally refers to one or more hand poses and/or movements that can be recognized, identified, or otherwise determined by an XR system to represent a particular class, category, or type of movement. For instance, a "gating gesture" may encompass one or more hand poses and/or movements (e.g., pinching an index finger and thumb, pinching a middle finger and thumb, bringing the pinky, ring, and middle fingers to the palm while extending the index finger and thumb in an L-shape, etc.) that causes an XR system to transition from a general input context to a locomotion input context or mode. A "release gesture" may refer to a gesture that is complementary to the gating gesture (e.g., releasing two pinched fingers, extending the pinky, ring, and middle fingers away from the palm, etc.), such that the gating gesture can be described as "held" until it undone or released. In some implementations, instead of the hold-and-release paradigm, the gating gesture may act as a toggle that changes the input context to a locomotion mode, while the "release" gesture may be a separate, independent gesture that toggles the input context back to a general input context.

In some cases, a release gesture may modify the context of the locomotion mode. For example, a gating gesture may first trigger the virtual locomotion system to enter a selection context for selecting which locomotive action to perform. A user can select a locomotive action by moving their hand over a particular region and performing a release gesture. In some cases, the release gesture both causes the character to perform the selected locomotive action and transitions the input context back to the general input context. In other cases, the selected locomotive action may be a transition from the selection context or mode into another locomotion-related context, such as a teleportation mode. Thus, the term "release" gesture refers to a gesture that causes a virtual locomotion system to change input contexts.

Within a teleportation mode or context, the term "triggering gesture" may be used to refer to a gesture that causes the character to teleport from one location to another. For instance, a pinch-and-release gesture may serve as the triggering gesture, which can be performed multiple times within the teleportation mode to successively teleport a character through an XR environment. The teleportation context may be exited when the user performs an "exit gesture" (e.g., twisting the wrist or reorienting the hand), which changes the input context in a similar manner as the release gesture. The particular gating, release, triggering, and exit gestures may vary across different implementations.

As described herein, the term "precise" generally refers to a defined range of motion or region in an XR environment that is associated with fine locomotive control, such as smooth, continuous, or small-increment adjustments to a character's position and/or orientation. For example, a gesture performed within a precise region might cause the character to turn smoothly, while a gesture performed outside of that precise region causes the character to snap turn or otherwise turn rapidly by some discrete interval. Thus, locomotive actions triggered within a precise region may be described as "continuous" (e.g., very small increments), "smooth," or "fine," whereas locomotive actions triggered outside of the precise region may be described as "discrete" (e.g., large increments) or "snap" movements or reorientations.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

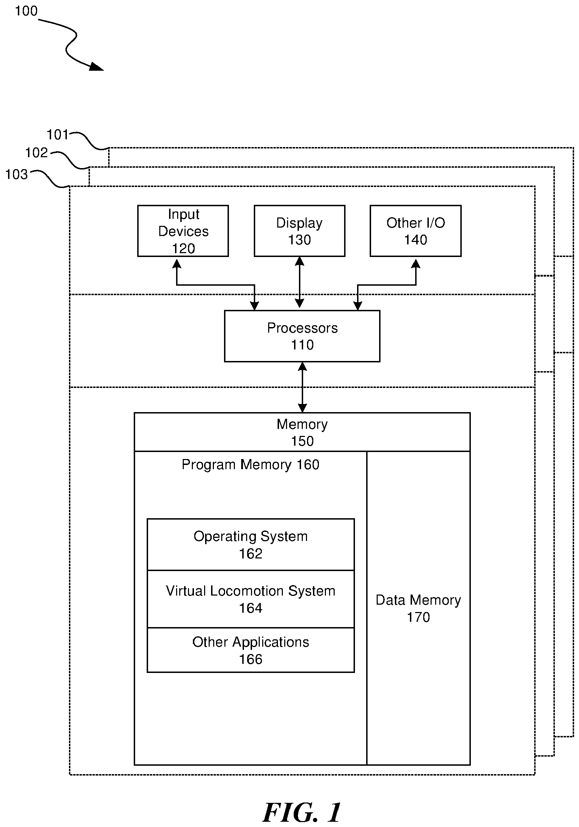

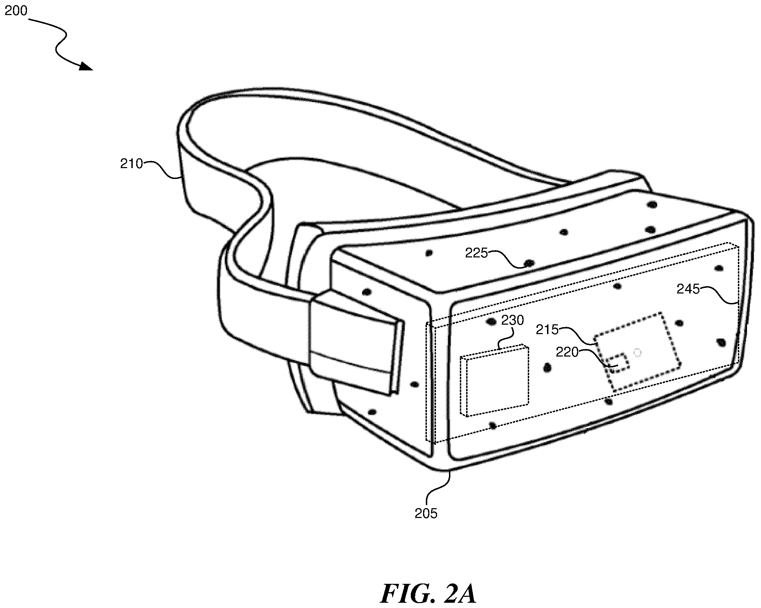

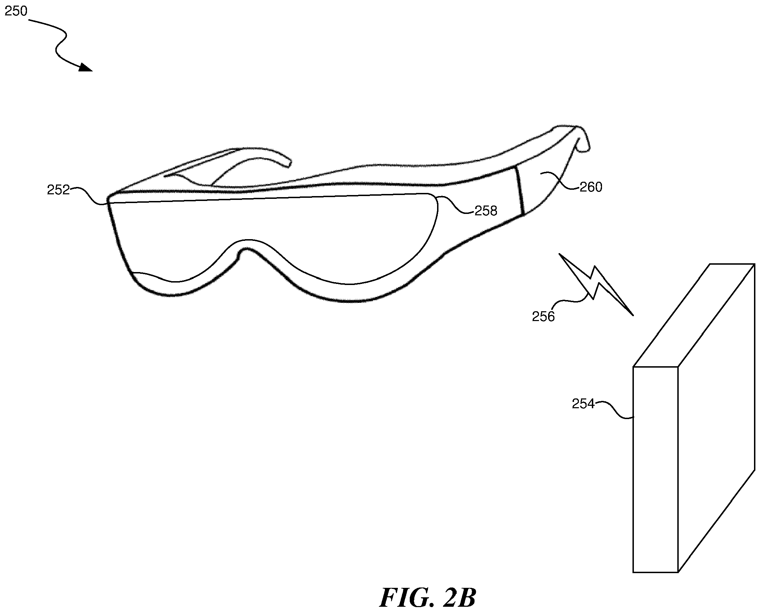

Several implementations are discussed below in more detail in reference to the figures. Figure 1 is a block diagram illustrating an overview of devices on which some implementations of the disclosed technology can operate. The devices can comprise hardware components of a computing system 100 that controls a character's position and orientation in an artificial reality environment. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, virtual locomotion system 164, and other application programs 166. Memory 150 can also include data memory 170 that can include, e.g., gesture recognition models, virtual controller user interface graphical elements, XR environment constraints, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

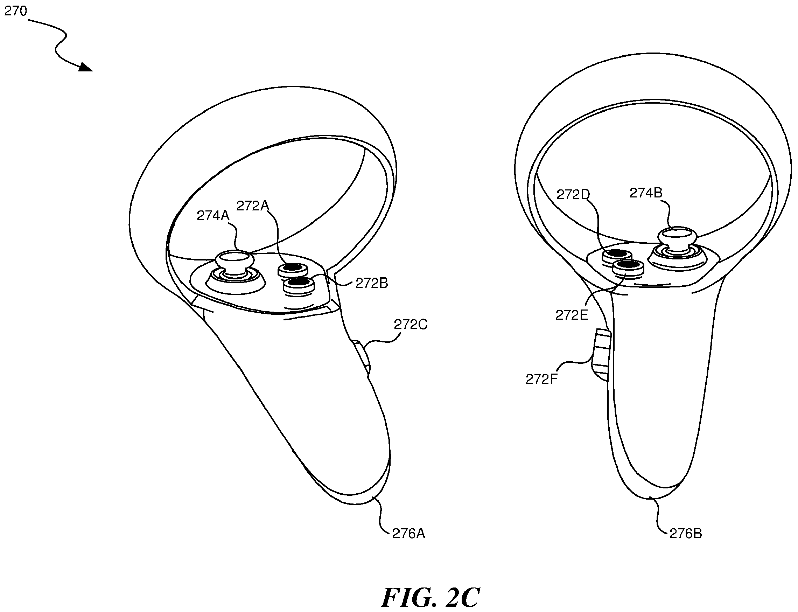

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

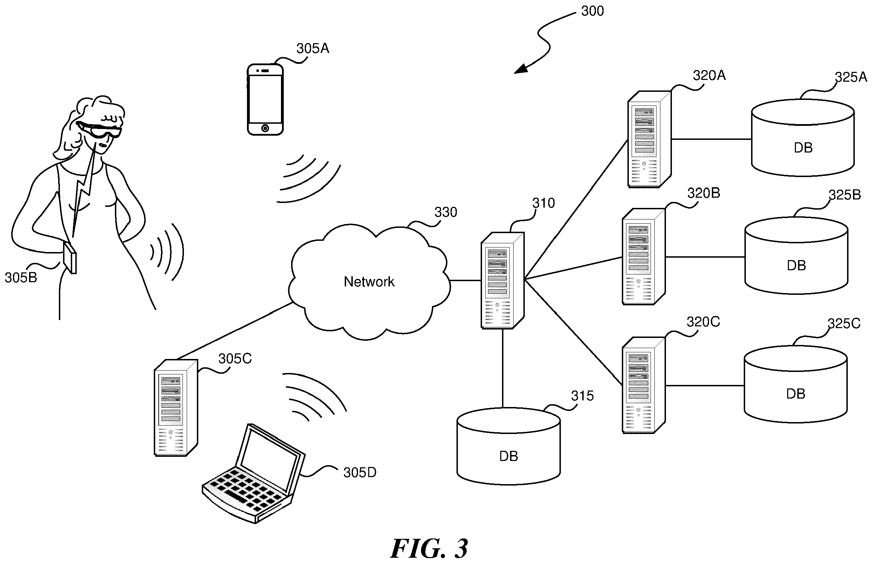

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

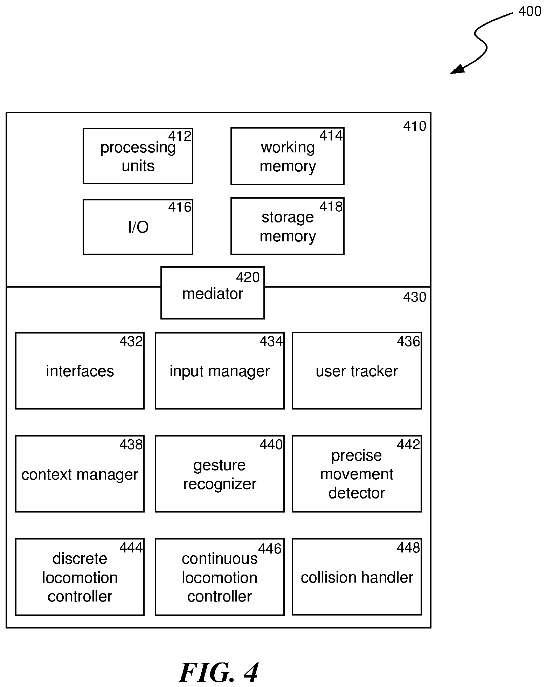

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for providing a virtual locomotion system that controls a character's position and orientation in an XR environment. Specialized components 430 can include input manager 434, user tracker 436, context manager 438, gesture recognizer 440, precise movement detector 442, discrete locomotion controller 444, continuous locomotion controller 446, collision handler 448, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

Input manager 434 can manage the display of a virtual interface (e.g., virtual controllers and/or layers thereof) and various input modalities from the user to perform selections from the virtual interface (e.g., locomotive actions, context transitions, etc.). For example, input manager 434 can display a virtual controller within the line of sight of a user. In some implementations, the virtual controller can be displayed at a threshold distance (or within a distance range) from the user. For example, the virtual controller can be displayed at least 0.5 meters from the user, within arm's length from the user, any combination of these, or at any other suitable distance. The virtual controller may be displayed at a specific, fixed region within the first-person perspective of a character's FOV, which remains in the same area within the user's FOV even as the user moves and reorients their FOV in the XR environment- such that it continues to be within a line of sight for the user given user movements (e.g., head turns, body turns, etc.).

Implementations of input manager 434 can receive tracked user hand input (e.g., from camera(s), IMU data, via user tracker 436, etc.), and can estimate the user's hand pose to enable hand pose and gesture recognition. For example, input manager 434 can compare the tracked user hand input (e.g., tracked hand and/or finger motion) to a trigger criteria. When the tracked user hand input meets the trigger criteria (e.g., a gating gesture recognized by gesture recognizer 440), input manager 434 can cause the computing system 100 to render a virtual controller. In some embodiments, input manager 434 can also render user interface elements of teleportation systems shown and described herein.

User tracker 436 can track a user's body to obtain user input in various modalities. One or more sensors of an XR system (e.g., cameras, wearable sensors such as accelerometer(s), etc.) can sense the user's body conditions (e.g., hand movement, wrist movement, arm movement, finger movement, etc.) to track a user's hand(s) motion. The tracked user hand motion can be provided to input manager 434 as tracked user hand input, which can be subsequently processed by gesture recognizer 440 to detect particular hand gesture(s) and/or types of gestures.

Context manager 438 may track the context, mode, or state of a gesture-based input system (e.g., a general input context, locomotion mode, selection mode, teleportation mode, etc.) to determine what action(s) to take in response to detecting various gestures, if any. For instance, a general input context may allow users to interact with objects in an XR environment and user interface elements, such as menus, virtual keyboards, pop up windows, and the like. However, to prevent unintentional interactions with the XR environment, context manager 438 may manage the state of the input system-such as transitioning an input context from the general input context to a locomotion mode in response to gesture recognizer 440 detecting a gating gesture. While in the locomotion mode, context manager 438 may coordinate with gesture recognizer 440 and input manager 434 to determine whether a given gesture corresponds to a particular action with respect to the locomotion mode context.

Gesture recognizer 440 may receive tracked user hand motion from user tracker 436 and classify one or a plurality of user hand motion frames, keypoint models, or other data representative of a user's hand pose at a particular time or at multiple points in time as a particular gesture, type of gesture (e.g., gating, release, triggering, exit, etc.). Gesture recognizer 440 may include statistical models, machine learning models, and/or other gesture recognition models that can classify tracked user hand motion. In some implementations, gesture recognizer 440 can classify tracked user hand motion as a particular gesture (e.g., index pinch gesture), which input manager 434 interprets in view of the current context or mode from the context manager 438 to determine the contextualized gesture (e.g., a gating gesture).

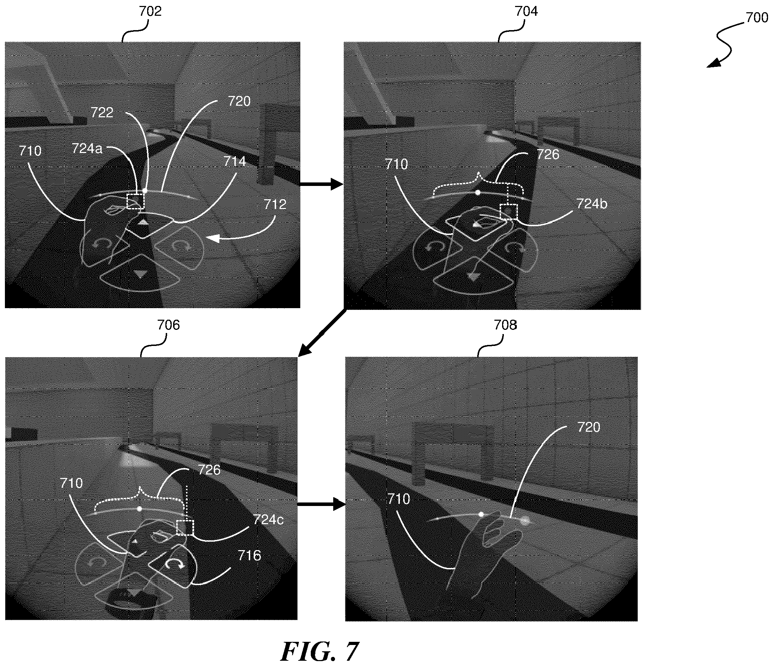

Precise movement detector 442 can receive tracked user hand motion from user tracker 436 to monitor the location of a user's hand relative to a precise region (e.g., a user interface element or region defined by input manager 434). If the user's hand moves within the precise region, precise movement detector 442 can direct locomotion controls from input manager 434 to continuous locomotion controller 446 to exert fine locomotive control of a character's position and/or orientation in an XR environment. Alternatively, if the user's hand moves beyond the precise region, precise movement detector 442 can direct locomotion controls from input manager 434 to discrete locomotion controller 444 to exert snap locomotive control of a character's position and/or orientation in an XR environment. An example of precise detection is shown and described with respect to Figure 7.

Discrete locomotion controller 444 can convert a locomotive action from input manager 434 into a corresponding API, SDK, or other function call to an XR engine to control a virtual camera, player character, or other character in an XR environment in large intervals or increments (e.g., turn left by 30 degrees, move forward by 2 meters, etc.). In contrast, continuous locomotion controller 446 can convert a locomotive action from input manager 434 into a corresponding API, SDK, or other function call to an XR engine to control a virtual camera, player character, or other character in an XR environment in small intervals or increments (e.g., turn left by 0.5 degrees, move forward by 1 centimeter, etc.). "Continuous" locomotion generally refers one or multiple movements or reorientations to create the impression of smooth, natural motion (as compared to snappy, rapid turns or teleporting movement).

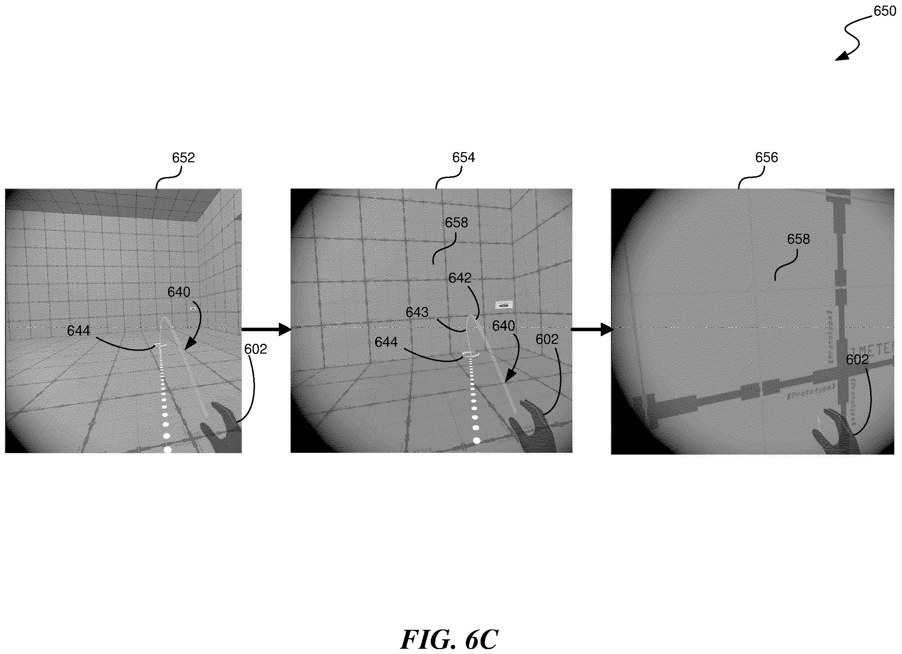

Collision handler 448 can determine whether a teleportation arc collides or intersects with a wall, ceiling, or other surface that the character is not permitted to move to, and determine a nearby location at which to move the character upon triggering the teleportation. For example, if the user aims a teleportation arc at a wall, collision handler 448 can compute, calculate, or otherwise determine an appropriate teleport location along the ground surface adjacent to the wall and proximate to the aimed-at teleport location. An example of collision handling is shown and described with respect to Figure 6C.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

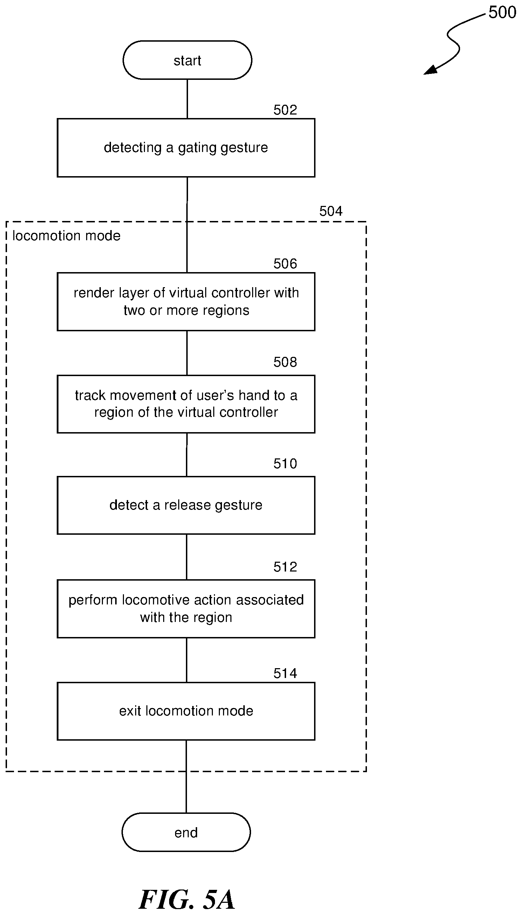

Figure 5A is a flow diagram illustrating a process 500 used in some implementations of the present technology for performing gesture-based locomotion in an XR environment. In some implementations, process 500 can be performed "just in time," e.g., as a part of an ongoing gesture detection process of a virtual locomotion system executed in an XR application. In some implementations, process 500 can be triggered by a user launching an XR application in an XR system, by entering a first-person perspective of a character in an XR environment, or in response to the user manually activating a gesture-based virtual locomotion system.

At block 502, process 500 detects a gating gesture, such as a pinch, forming an "L" shape with the index finder and thumb, or any other gesture that is able to be detected by a gesture recognizer. Upon detecting the gating gesture, process 500 causes the XR system to transition to a locomotion mode 504, thereby switching the input context.

At block 506, process 500 renders a layer of a virtual controller with two or more spatially-separated regions. Depending on the particular implementation, a virtual controller may include a single layer or multiple layers. Each layer may include one or more regions, each of which is associated with a particular locomotive action such as smooth movement, snap movement, smooth turning, snap turning, crouching, jumping, or another action. The virtual controller may be rendered at a location that is fixed from the character's first-person perspective (e.g., at the bottom left of the first-person FOV).

In some implementations, process 500 may resolve a starting location in the XR environment at which the gating gesture was performed. For example, if the gating gesture is specified as a pinch between the index finger and thumb, the starting location might be set at or near the point where the index finger and thumb met. In these implementations, process 500 can position the virtual controller to be centered at the determined starting location. As a specific example, if a layer of a virtual controller includes four pie-shaped regions (i.e., a circle divided into four spatially-separated regions), the virtual controller may be centered at the starting location, such that the starting position is located in between the four pie-shaped regions. Because the pie-shaped regions are spatially-separated, the starting location is not over or within any of the regions. However, if the user moves their hand, process 500 tracks the location of the motion or gesture (e.g., the pinch point)-such that the user can pinch to invoke the virtual controller and drag to hover over one of the regions to "select" that region.

At block 508, process 500 tracks movement of a user's hand to a particular region of the two or more spatially-separated regions of the virtual controller. Then, at block 510, process 500 detects a release gesture, such as un-pinching the pinched index finger and thumb. In this example, the user's hand movement over the particular region serves to "select" the region, and the release gesture serves to confirm that selection.

At block 512, process 500 performs a locomotive action associated with the particular region. For instance, process 500 can cause an XR application to exert locomotive control over the character (e.g., making function calls to an engine's SDK).

In this example, the locomotive action is not repeated, nor does it cause the XR system to transition to a different input context. As a result, at block 514, process 500 exits locomotion mode. However, it will be appreciated that certain locomotive actions might be configured to be repeatable. In such cases, the virtual locomotion system may be operable to detect a distinct exit gesture before triggering block 514.

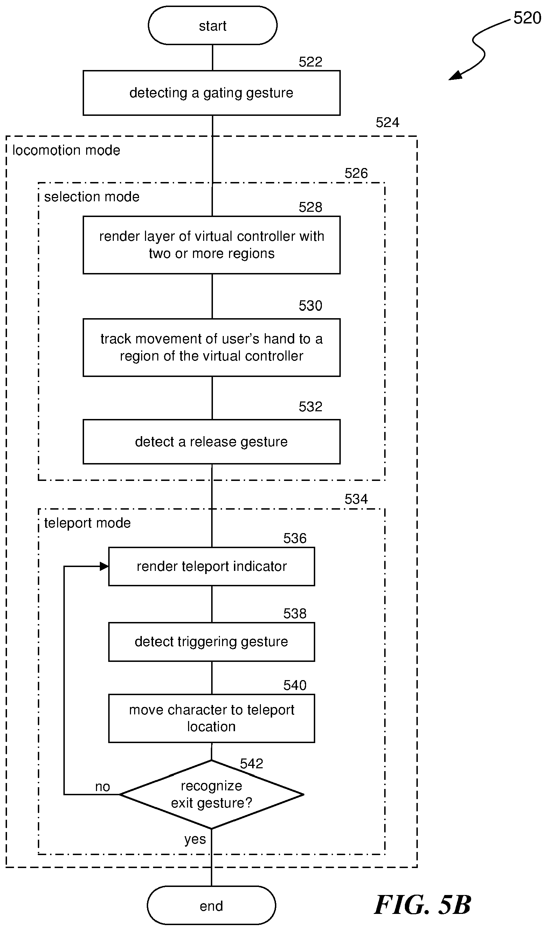

Figure 5B is a flow diagram illustrating a process 520 used in some implementations of the present technology for performing gesture-based teleportation in an XR environment. In some implementations, process 520 can be performed "just in time," e.g., as a part of an ongoing gesture detection process of a virtual locomotion system executed in an XR application. In some implementations, process 520 can be triggered by a user launching an XR application in an XR system, by entering a first-person perspective of a character in an XR environment, or in response to the user manually activating a gesture-based virtual locomotion system.

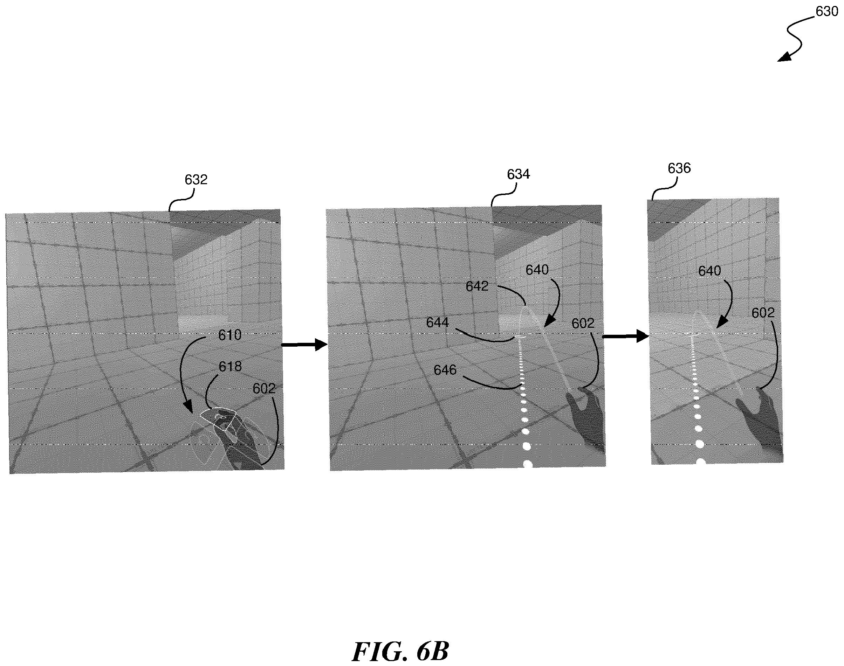

At block 522, process 520 detects a gating gesture. Block 522 may be similar to or the same as block 502 described above with respect to Figure 5A. Upon recognizing the gating gesture, process 520 causes the input context to transition to a locomotion mode 524. In this example, locomotion mode 524 includes two sub-contexts: selection mode 526 for selecting the locomotive action; and teleport mode 534, which may replace the user virtual controller from selection mode 526 with a teleport indicator, visually signaling to the user that the input mode has changed. Example teleport indicators are shown and described with respect to Figures 6B and 6C.

At block 528, process 520 renders a layer of a virtual controller with two or more spatially-separated regions. Block 528 may be similar to or the same as block 506 described above with respect to Figure 5A.

At block 530, process 520 tracks movement of a user's hand to a particular region of the two or more spatially-separated regions of the virtual controller. In this example, the particular region is associated with a locomotive action for activating teleport mode 524. An example region for activating a teleport mode is shown and described with respect to Figure 6B. At block 532, process 520 detects a release gesture, which confirms the selection of the teleport region in the virtual controller, which causes the XR system to transition from selection mode 526 to teleport mode 534.

At block 536, process 520 renders a teleport indicator. The teleport indicator may include an arc extending between the character and a teleport location some distance away from the character, which may curve in the vertical direction (e.g., to signal to the user about the possibility of teleporting the character to a surface at a higher elevation than the character is currently positioned). The teleport indicator may also include a line (solid, dashed, dotted, etc.) extending along the ground surface on which the character is positioned between the character and the teleport location (i.e., the same or similar starting and ending points as the arc, but without curving in the vertical direction). The teleport location may also be graphically represented to indicate to the user where the character would teleport if the user triggered the teleportation, such as with a small circle centered at the teleport location. Other user interfaces are also possible. In some implementations, the teleport indicator moves outward from the user at a pace consistent with a maximum speed of the user in the artificial reality environment. This makes teleportation locomotion consistent with bipedal locomotion, so characters are limited to a maximum movement speed, even when using teleportation. For example, if there are two users in the same artificial reality environment, where one is using bipedal locomotion and the other is using teleportation, neither will be faster than the other. Example teleport indicators are shown and described with respect to Figures 6B and 6C.

At block 538, process 520 detects a triggering gesture. The triggering gesture may be similar to the gating gesture (e.g., pinching with the index finger and thumb), such that the user does not need to memorize a large number of gestures to use the gesture-based locomotion system. In other implementations, the triggering gesture may be a unique gesture (e.g., closing all five fingers to the palm, pinching the middle finger and thumb together, etc.) so that users associate the gating gesture as a context-switching gesture, which is distinct from the triggering gesture.

At block 540, process 520 moves the character to the teleport location in response to recognizing the triggering gesture. In other words, the character is "teleported" from its current location to the teleport location. In some implementations, "teleporting" a character might involve instantly (i.e., in a single frame of an XR engine) changing the character's position, or might involve rapidly changing the character's position over a short period of time (e.g., across a few frames).

At block 542, process 520 determines whether an exit gesture has been recognized. If process 520 does not recognize an exit gesture, process 520 stays in teleport mode 534 and returns back to block 536. Alternatively, if process 520 recognizes or detects an exit gesture, process 520 exits teleport mode 534 and locomotion mode 524.

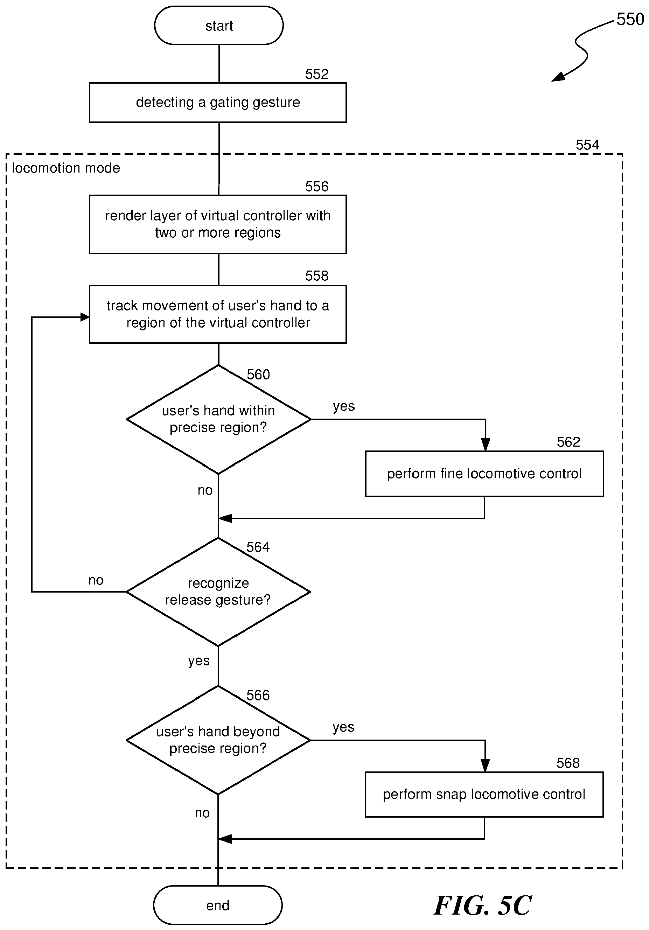

Figure 5C is a flow diagram illustrating a process 550 used in some implementations of the present technology for performing gesture-based fine locomotive control and snap locomotive control in an XR environment. In some implementations, process 550 can be performed "just in time," e.g., as a part of an ongoing gesture detection process of a virtual locomotion system executed in an XR application. In some implementations, process 550 can be triggered by a user launching an XR application in an XR system, by entering a first-person perspective of a character in an XR environment, or in response to the user manually activating a gesture-based virtual locomotion system.

At block 552, process 550 detects a gating gesture. Block 552 may be similar to or the same as block 502 described above with respect to Figure 5A. Upon detecting the gating gesture, process 550 causes the XR system to transition to a locomotion mode 554.

At block 556, process 550 renders a layer of a virtual controller with two or more spatially-separated regions. Block 556 may be similar to or the same as block 506 described above with respect to Figure 5A.

At block 558, process 550 tracks movement of a user's hand to a particular region of the two or more spatially-separated regions of the virtual controller. Block 558 may be similar to or the same as block 508 as described above with respect to Figure 5A.

At block 560, process 550 determines whether the user's hand is positioned within a precise region. The precise region may extend continuously across a defined horizontal region, with that horizontal region being visually denoted by a precise user interface element (see, e.g., precise UI element 726 of Figure 7). If process 550 determines that the user's hand is within the precise region (e.g., as shown in frame 704 of Figure 7), process 550 proceeds to block 562. At block 562, process 550 controls the character's position and/or orientation using fine locomotive control (e.g., continuous motion, smooth turning, etc.).

After block 562 completes, or if process 550 determines that the user's hand is positioned beyond the precise region (e.g., as shown in frame 706 of Figure 7), process 550 proceeds to block 564. At block 564, process 550 determines whether the user's hand motion represents a release gesture. If the user's hand motion does not represent a release gesture, process 550 returns to block 558 to continue tracking the user's hand movements. Alternatively, if the user's hand motion is recognized by process 550 to be a release gesture, process 550 proceeds to block 566.

At block 566, process 550 determines whether the user's hand was positioned beyond the precise region when they performed the release gesture. If so, process 550 proceeds to block 568, wherein process 550 performs snap locomotive control (e.g., discrete movement, turning by large intervals, etc.). Alternatively, if process 550 determines that the user's hand was within the precise region when they performed the release gesture, then process 550 determines that no snap locomotive control has been input and exits locomotion mode 554.

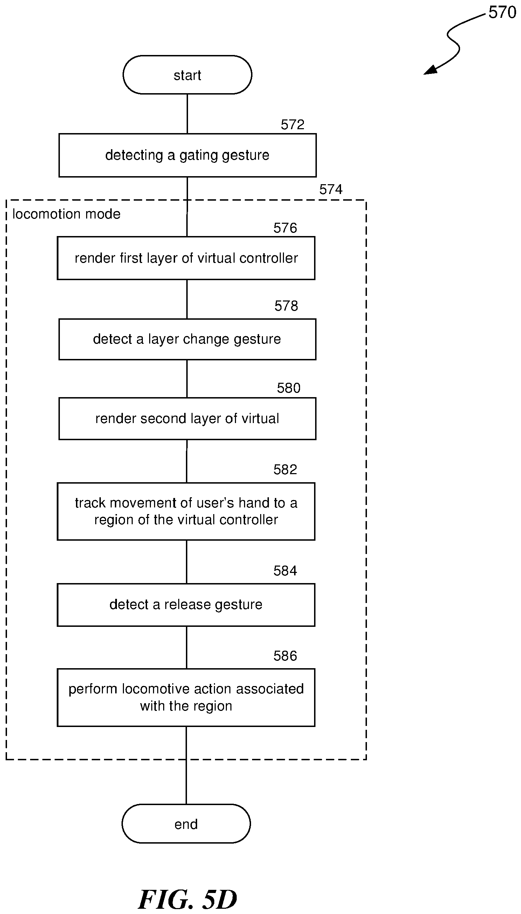

Figure 5D is a flow diagram illustrating a process 570 used in some implementations of the present technology for gesture-based navigation of a multi-layer virtual controller in an XR environment. In some implementations, process 570 can be performed "just in time," e.g., as a part of an ongoing gesture detection process of a virtual locomotion system executed in an XR application. In some implementations, process 570 can be triggered by a user launching an XR application in an XR system, by entering a first-person perspective of a character in an XR environment, or in response to the user manually activating a gesture-based virtual locomotion system.

At block 572, process 570 detects a gating gesture. Block 572 may be similar to or the same as block 502 described above with respect to Figure 5A. Upon detecting the gating gesture, process 550 causes the XR system to transition to a locomotion mode 554.

At block 576, process 570 renders a first layer of a virtual controller with two or more spatially-separated regions. In this example, the virtual controller includes multiple layers, with each layer having one or more regions associated with one or more locomotive actions, respectively. The first layer can therefore include a first set of locomotive actions (e.g., walking forward, walking backward, turning left, and turning right) corresponding to one navigation style or paradigm. For instance, the first layer may include locomotive controls that are useful for navigating through a maze, where forward motion and turning are the most commonly locomotive actions.

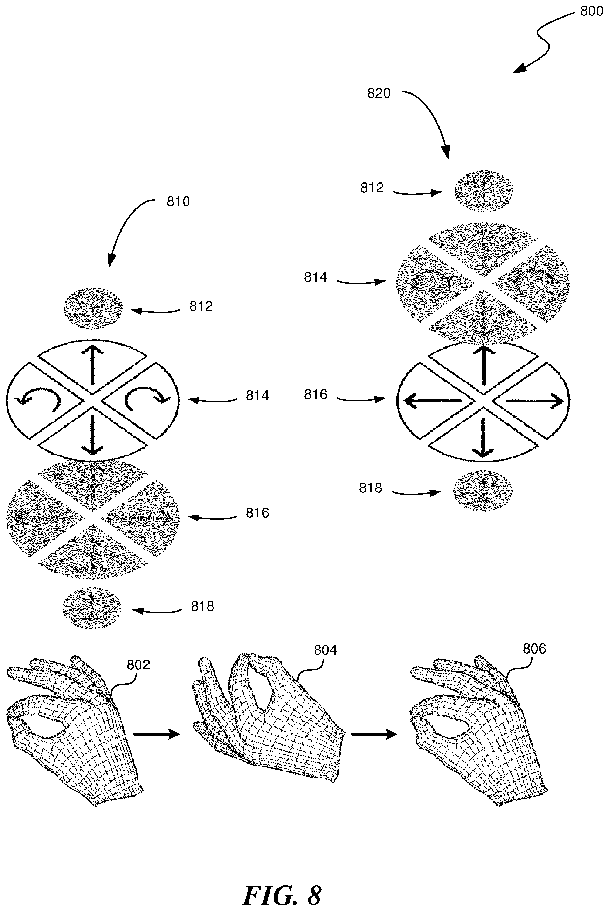

At block 578, process 570 detects a layer change gesture. A layer change gesture may be any recognizable hand motion that changes the active, focused, or visible layer of a multi-layer virtual controller. For example, if a pinch-and-hold gesture is used as the gating gesture, reorienting the user's hand (e.g., twisting the wrist to rotate a face-down palm to a face-up palm, such as is shown in Figure 8) while the gating gesture is held may cause the virtual locomotion system to move "up" or "down" a layer in the multi-layer virtual controller. The direction of the rotation may be used to specify which direction to navigate through the layers of a multi-layer virtual controller (e.g., clockwise turning moving down a layer and counter-clockwise turning moving up a layer, if such a layer exists in the multi-layer virtual controller).

At block 580, process 570 renders a second layer of a virtual controller. In some implementations, process 570 only renders a single layer of the virtual controller at a time, such that the first layer is replaced by the second layer. In other implementations, process 570 changes which layer is focused or active, with adjacent layers or other layers being translucent, grayed out, smaller in size, or otherwise visually denoted as inactive relative to the active layer. An example implementation where a layer change gesture changes a rendered or focused layer of a virtual controller is conceptually shown and described with respect to Figure 8.

At block 582, process 570 tracks movement of a user's hand to a particular region of the two or more spatially-separated regions of the virtual controller. Block 582 may be similar to or the same as block 508 as described above with respect to Figure 5A. The particular region may be associated with a locomotive action that is not present in the first layer. For example, a first layer may include locomotive controls for turning to the left or right, while the second layer replaces those locomotive controls with strafing to the left or right (i.e., translating left or right without turning). In this example, the user can perform the layer change gesture to switch to the second layer, and use the second layer to move the character without turning-a locomotive paradigm that may be preferable in some circumstances.

At block 584, process 570 detects a release gesture. Block 584 may be similar to or the same as block 510 as described above with respect to Figure 5A. Then, at block 586, process 570 performs locomotive action associated with the particular region. Block 586 may be similar to or the same as block 512 as described above with respect to Figure 5A.

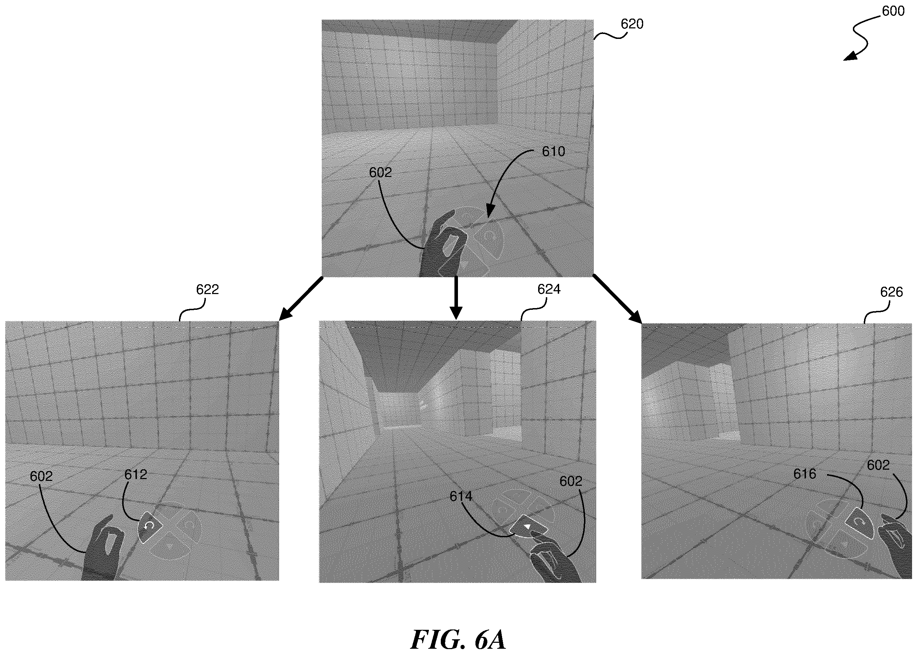

Figure 6A is a conceptual diagram 600 illustrating an example of a gesture-based virtual controller for controlling a character in an XR environment. At frame 620, the user's hand 602 performs a gating gesture, which causes the virtual locomotion system to render a layer of the virtual controller 610. If the user moves their hand 602 to the left over or proximate to virtual button 612 as shown in frame 622, the user interface may visually indicate that the user has selected the virtual button 612 (e.g., turn left). Alternatively, if the user moves their hand 602 downward over or proximate to virtual button 614 as shown in frame 624, the user interface might visually indicate that the user has selected virtual button 614 (e.g., move backward). In addition, if the user moves their hand 602 to the right over or proximate to virtual button 616 as shown in frame 626, the user interface may visually indicate that the user has selected virtual button 616 (e.g., turn right). The user may trigger any of the locomotive actions by performing a release gesture, such as un-pinching their pinched fingers.

As shown in Figure 6A, a virtual button may be spatially smaller than the region within which the user's hand can move to select that locomotive action, such that the virtual button acts as an icon and visual feedback to the user, but does not denote the full extent of the selectable region. Having a selectable region that is larger than the icon or virtual button may be desirable to reduce the precision needed to select the locomotive action, and therefore make the gesture-based locomotion system more user-friendly. Thus, it will be appreciated that the boundaries of a "spatially-separated region" as described herein may not necessarily be defined by a user interface element.

Figure 6B is a conceptual diagram 630 illustrating an example of a teleportation system for moving a character in an XR environment. Before frame 632, the user's hand 602 performed a gating gesture, which caused the virtual locomotion system to render the layer of the virtual controller 610 and enter a selection mode. At frame 632, the user's hand 602 moves their hand 602 to the upward over or proximate to virtual button 618, and the user interface visually indicates that the user has selected the virtual button 618 (e.g., activate teleport mode).

While selecting the virtual button 618, the user's hand performs a release gesture at frame 634, which causes the virtual locomotion system to exit the selection mode and enter a teleport mode. As shown in frame 634, a teleport indicator 640 is rendered, which shows a teleport location 644, a vertically-curved arc 642 extending between the user's hand 602 and the teleport location 644, and a dotted linear line 646 extending from the character's location on the ground surface to the teleport location 644. The user can adjust or "aim" the teleport location 644 by moving their hand 602. In some cases, the teleport location 644 can start at the user's location and move at a speed matching the maximum speed of the user's character in the artificial reality environment. Thus, the teleportation locomotion speed can be consistent with the maximum speed of the user's character. Once a desired teleport location is set, the user can perform a trigger gesture (e.g., pinch and un-pinch) to cause the character to teleport to the teleport location 644 from their location shown in frame 634 to the location shown in frame 636. Once the teleport action has been performed, the virtual locomotion system may render the teleport indicator 640 again, thereby allowing the user to teleport multiple times in succession to navigate through the XR environment. In some implementations, the repetitive rendering of the teleport indicator 640 can reset to the user's current location after each teleport and can move outward from the user at the maximum speed of the user's character - keeping teleportation locomotion consistent with bipedal locomotion.

Figure 6C is a conceptual diagram 650 illustrating an example of a teleportation system encountering environmental limits when moving a character in an XR environment. Prior to frame 652, the user activated teleport mode and positioned their character near a wall 658. In this example, the user first teleports forward from the location shown in frame 652 to the location shown in frame 654. At frame 654, the user aims the teleport indicator 640 at the wall 658, such that the arc 642 collides with the wall 658 at a collision point 643. In this scenario, the arc 642 is shown to abruptly change direction at the collision point 643, and extend from the collision point 643 to teleport location 644. In this manner, the user is visually informed of the collision, how that collision is resolved, and where the user will teleport if they trigger the teleport action. The user then triggers the teleport action, which causes the character to move to the teleport location 644 shown in frame 654, which is shown in frame 656. In this manner, the teleport system may be constrained by environmental rules (e.g., the user cannot move through walls, cannot stand on the wall, etc.).

Figure 7 is a conceptual diagram 700 illustrating an example of a precise system for providing both fine locomotive control and snap locomotive control of a character in XR environment. Prior to frame 702, the user's hand performed a gating gesture, which triggered the virtual locomotion system to render a layer of the virtual controller 712 and a precision indicator 720. In this implementation, the precision indicator 720 includes a central dot 722 to indicate the center or "zero point" of a precise region 726, which extends between dots toward the left and right ends of the precise region 726. In addition, a specific location 724a of the user's hand 710 is shown with a translucent dot to visually inform the user where they are within the precise region 726 (i.e., similar to a mouse or pointer).

At frame 702, the user moves their hand 710 forward onto the region associated with virtual button 714, which in this example is used to smoothly or incrementally move the character forward (e.g., walk or run forward). At frame 704, the user moves their hand 710 to the right to location 724b, which is contained within the precise region 726. As a result, the character continues moving forward and strafes slightly to the right simultaneously, allowing the user to move smoothly along the diagonal track shown in the XR environment. At frame 706, the user moves their hand 710 even further to the right beyond the boundary of the precise region 726 to location 724c, which causes the virtual locomotion system to highlight or illuminate virtual button 716 associated with a snap turn to the right by a predetermined interval (e.g., 10 degrees, or some other discrete turn interval). When the user's hand 710 performs the release gesture at location 724c, the virtual locomotion system triggers the character to snap turn to the right, such that the character's orientation changes from the orientation shown in frame 706 to the orientation shown in frame 708. In this manner, the precise system enables a single layer and input context (e.g., locomotion mode) to be used to perform smooth or fine locomotion, as well as snap or discrete locomotion.

Figure 8 is a conceptual diagram 800 illustrating an example navigation through a multi-layer virtual controller using a layer change gesture. A virtual controller is conceptually shown in state 810 when the user performs a gating gesture, resulting in hand pose 802. Initially, the virtual controller sets layer 814 as the active, highlighted, or visible layer, with layers 812, 816, and 818 either shown as grayed out, translucent, invisible, or otherwise denoted as inactive. In this example, layer 812 includes a virtual button for triggering the character to jump or un-crouch; layer 814 includes virtual buttons for moving forward, moving backward, turning left, and turning right; layer 816 includes virtual buttons for moving forward, moving backward, strafing left, and strafing right; and layer 818 includes a virtual button for causing the character to crouch.

The user's hand then performs a layer change gesture by rotating the palm from a downward-facing orientation at pose 802 to an upward-facing orientation at pose 804, and then returning back to a palm-down facing orientation at pose 806. This sequence of reorientations can be recognized by a gesture model or gesture recognizer to denote a layer change gesture, with the direction of rotation specifying the direction through which to navigate through the multi-layer virtual controller. In response to detecting the layer change gesture, the virtual controller changes from state 810 to state 820, which switches the active layer from layer 814 to layer 816. In this manner, the virtual controller can include multiple sets of controls, and can switch between them to suit the needs of a particular activity or situation in an XR application.

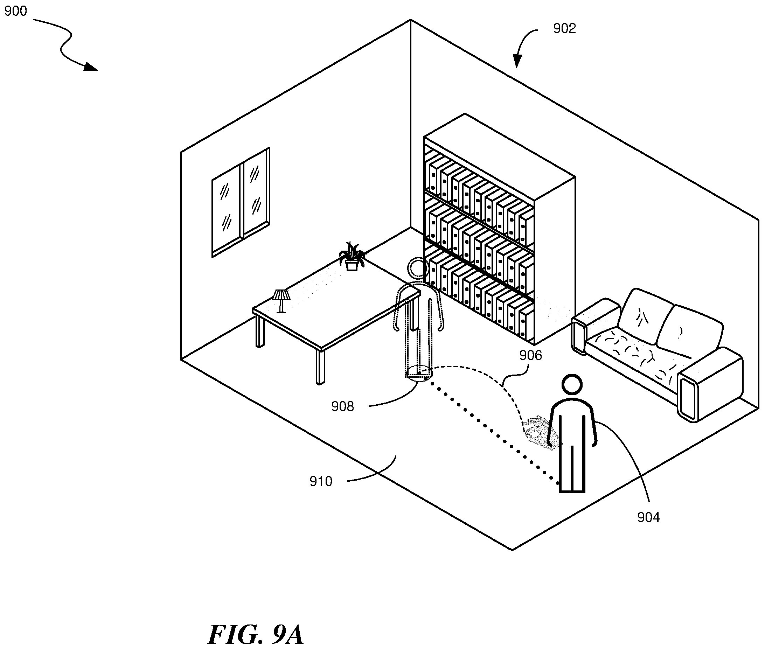

Figure 9A is a conceptual diagram 900 illustrating an example scenario in which gesture-based teleportation moves a character between two locations on the same surface. As shown in Figure 9A, a character 904 is situated within an XR environment 902, and the user has activated a teleport mode to render arc 906 extending between the character 904 and a teleport location 908. In this example, the character 904 and the teleport location 908 are located on the same ground surface 910. If the user performs the triggering gesture, the character 904 would teleport to teleport location 908.

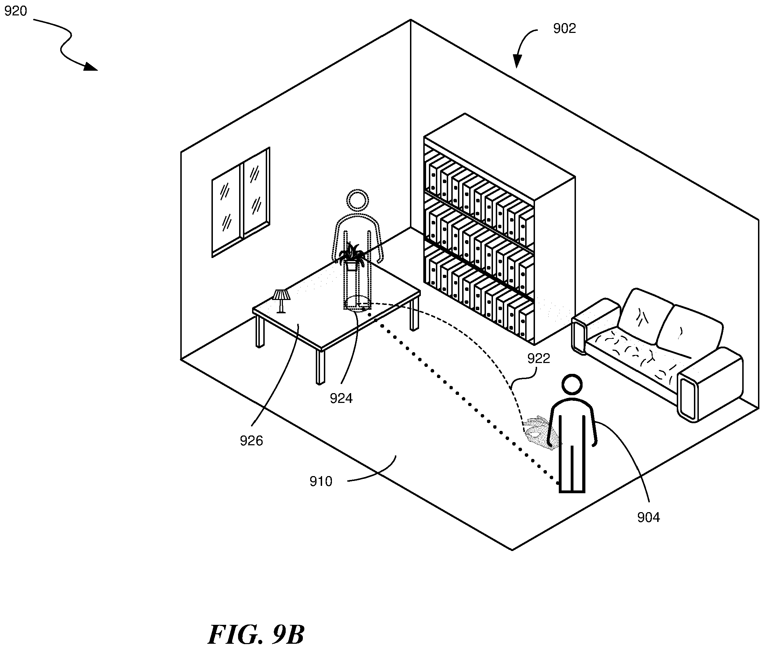

Figure 9B is a conceptual diagram 920 illustrating an example scenario in which gesture-based teleportation moves a character between locations on different surfaces at different elevations. As shown in Figure 9B, the user has aimed the arc 922 toward a teleport location 924 that is on a surface 926 of an object in the XR environment 902 that is at a higher elevation than the ground surface 910. If the user performs the triggering gesture, the character 904 would teleport to teleport location 924. The upward curvature of arc 922 can be used to indicate to the user that teleporting onto surfaces at different elevations is possible, and allow for easy navigation through an XR environment without having to jump or perform more complex maneuvers to move between surfaces at different elevations.

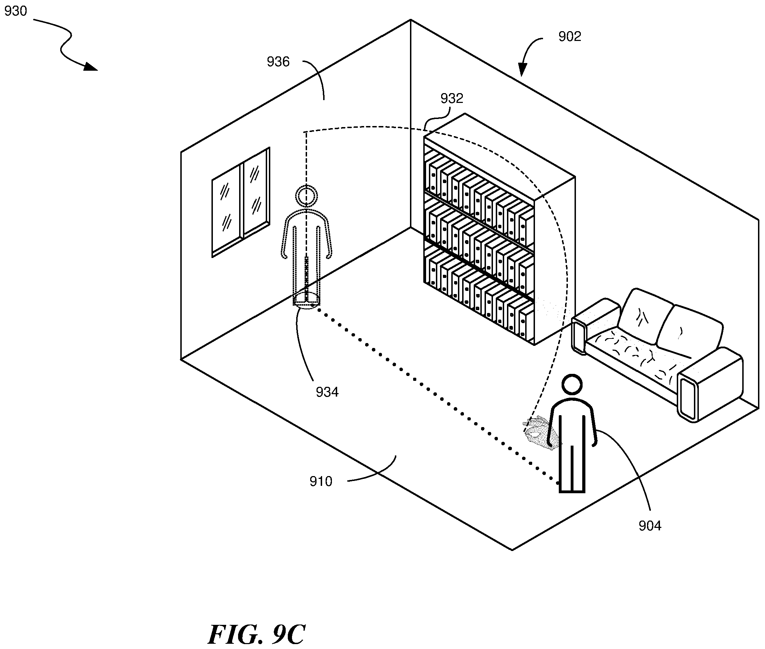

Figure 9C is a conceptual diagram 930 illustrating an example scenario in which gesture-based teleportation collides with a wall and resolves to move the character to a nearby location. Figure 9C conceptually illustrates the example implementation shown in Figure 6C. As shown in Figure 9C, the user has aimed the arc 932 to collide with wall 936 of the XR environment 902. In this example, the XR environment includes rules or constraints that specify that characters cannot move through walls and cannot stand on walls. Accordingly, the virtual locomotion system determines that teleport location 934 on the ground surface 910 is both a suitable location that is proximate to the intended teleport location, and does not violate the rules and constraints of the XR environment 902.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for controlling a character within a virtual reality environment, the method comprising:
monitoring a user's hand for a first motion;
identifying a gating gesture from the first motion, wherein the gating gesture occurs at a first location in the virtual reality environment;
based on the identification of the gating gesture, entering a locomotion mode; and
while in the locomotion mode:
rendering a user interface comprising two or more spatially-separated regions, wherein each of the two or more spatially-separated regions is associated with a respective locomotive action that controls at least one of a position and an orientation of the character;
monitoring the user's hand for a second motion, wherein the second motion includes a movement of the user's hand from the first location to a second location in the virtual reality environment, wherein the second location is within one of the two or more spatially-separated regions;
identifying a release gesture from the second motion, wherein the second motion occurs at the second location; and
upon identifying the release gesture, causing the character to perform the respective locomotive action associated with the one of the two or more spatially-separated regions.

2. The method of claim 1,
wherein the one of the two or more spatially-separated regions is associated with a locomotive action that updates the orientation of the character by a predetermined interval, and
wherein causing the character to perform the respective locomotive action comprises updating the orientation of the character by the predetermined interval.

3. The method of claim 1 or 2,
wherein the one of the two or more spatially-separated regions is associated with a locomotive action that moves the character by a predetermined interval, and
wherein causing the character to perform the respective locomotive action comprises updating the position of the character by the predetermined interval.

4. The method of any preceding claim, wherein the user interface is a first user interface, wherein the locomotion mode comprises a selection mode and a teleport mode, wherein entering the locomotion mode comprises entering the selection mode, and wherein the method further comprises:
upon identifying the release gesture, exiting the selection mode and entering the teleport mode; and
while in the teleport mode:
rendering a second user interface comprising an arc extending between the character and a teleport location in the virtual environment;
monitoring the user's hand for a third motion;
identifying a triggering gesture from the third motion; and
upon identifying the triggering gesture, moving the character to the teleport location.

5. The method of claim 4, wherein the third motion includes a movement of the user's hand from the second location to a third location in the virtual reality environment, wherein the teleport location is a first teleport location, and wherein the method further comprises:
based on the movement of the user's hand to the third location, updating the arc to extent between the character and a second teleport location in the virtual environment,
wherein moving the character to the teleport location comprises moving the character to the second teleport location;
preferably wherein the character is positioned on a first surface in the virtual environment,
wherein the second teleport location is on a second surface in the virtual environment, and wherein the second surface is at a higher elevation than the first surface in the virtual environment.

6. The method of claim 4 or 5, wherein the arc enters a first region in which the character is not permitted to be positioned at a collision point, and wherein the method further comprises:
determining the teleport location in the virtual environment as a location that is proximate to the collision point in a second region in which the character is permitted to be positioned.

7. The method of claim 6, wherein the character is not permitted to be positioned in the first region because the first region is blocked by a wall, and wherein teleport location is a location below the collision point and adjacent to the wall.

8. The method of claim 6 or 7, wherein the character is not permitted to be positioned in the first region because the first region is blocked by a ceiling, and wherein teleport location is a location below the collision point and beneath the ceiling.

9. The method of any of claims 4 to 8, further comprising:
while in the teleport mode:
monitoring the user's hand for a fourth motion;
identifying an exit gesture from the third motion; and
upon identifying the exit gesture, exiting the teleport mode.

10. The method of any preceding claim, wherein the user interface is a first user interface, wherein the two or more spatially-separated regions are two or more first spatially-separated regions, and wherein the method further comprises:
while in the locomotion mode:
monitoring the user's hand for a third motion, wherein the third motion includes a movement of the user's hand from the first orientation to a second orientation;
identifying a layer change gesture from the third motion; and
upon identifying the layer change gesture, rendering a second user interface comprising two or more second spatially-separated regions, wherein each of the two or more second spatially-separated region is associated with a respective locomotive action that controls at least one of a position and an orientation of the character, and wherein the two or more second spatially-separated regions are associated with different locomotive actions than that of the two or more first spatially-separated regions.

11. The method of any preceding claim, further comprising:
upon identifying the release gesture, exiting the locomotion mode.

12. The method of any preceding claim, further comprising:
detecting, from the first motion, an index finger and a thumb of the user's hand touching to form a pinching gesture,
wherein the identification of the gating gesture is based on the detection of the pinching gesture;
preferably further comprising:
detecting, from the second motion, the index finger and the thumb of the user's hand separating from the pinching gesture,
wherein the identification of the release gesture is based on the detection of the index finger and the thumb of the user's hand separating from the pinching gesture.

13. A computer-readable storage medium storing instructions that, when executed by a computing system, cause the computing system to carry out the method of any preceding claim.

14. A computing system for controlling a character within a virtual reality environment, the computing system comprising:
one or more processors; and
one or more memories storing instructions that, when executed by the one or more processors, cause the computing system to carry out the method of any of claims 1 to 12.

15. A computer program product comprising instructions which, when executed by a computing system, cause the computing system to carry out the method of any of claims 1 to 12.
